(19) Europäisches Patentamt
European Patent Office
Office européen des brevets

(11) Publication number: 0 404 377 A1

(12) # EUROPEAN PATENT APPLICATION

(21) Application number: 90306045.7

(22) Date of filing: 04.06.90

(51) Int. Cl.5: C08F 222/06, C08F 220/06, C02F 1/56, C11D 3/37, C08F 251/00

(30) Priority: 06.06.89 IT 2079889

(43) Date of publication of application: 27.12.90 Bulletin 90/52

(84) Designated Contracting States: BE CH DE ES FR GB LI NL

(71) Applicant: AUSIDET S.R.L.
14/16 Piazza della Repubblica
Milan(IT)

(72) Inventor: Colombo, Paolo
12 Via Avogadro
I-21047 Saronno, Varest(IT)
Inventor: Muratori, Giuseppe
2/C, Via Bazzoni,
28100 Novara(IT)
Inventor: Troglia, Claudio
27 R. Sanzio
I-20149 Milan(IT)
Inventor: Verzellino, Santina Rosanna
5, Via Pascal
I-20051 Limibiate, Milan(IT)

(74) Representative: Jones, Helen Marjorie Meredith et al
Gill Jennings & Every 53-64 Chancery Lane
London WC2A 1HN(GB)

(54) **Water soluble copolymers of maleic anhydride.**

(57) Water soluble copolymers of maleic anhydride and (meth) acrylic acid (and the corresponding ammonium and/or alkali metal salts) that are particularly useful in the field of detergency have a weight average molecular weight from 1,000 to 30,000, a polydispersity ratio from 1.5 to 4, and a dispersing capacity between 150 and 400 mg $CaCO_3$/g of dry copolymer. They can have a Klett colour value lower than 100. They can be made by oxidative cleavage of higher molecular weight polymers at a pH of 3 to 7.5

EP 0 404 377 A1

## Water Soluble Copolymers of Maleic Anhydride

This invention relates to water soluble copolymers of maleic anhydride, their use for instance in detergents or as precipitation or scale inhibitors, and to processes for their production.

It is known that polymers of, for instance, maleic anhydride and (meth) acryic acid are of value in detergents and as scale inhibitors and precipitation inhibitors.

Although it is known that polymers formed from maleic anhydride can be used in detergents, existing polymers have an unsatisfactory combination of physical and performance properties.

It is known that polymers of maleic anhydride that are to be used in detergents should have relatively low molecular weight. The normal way of making water soluble polymers of maleic anhydride is by polymerisation in the presence of rather large amounts of molecular weight regulators. Unfortunately this has a number of disadvantages. The regulators are frequently expensive. The more effective regulators impart an unpleasant odour to the final polymer since they are usually mercapto derivatives, thio alcohols, thio ethers or thio acids. The presence of large amounts of regulator adversely affects the reaction kinetics, and thus increases the amount of catalyst that is required. The polydispersity of the product tends to be rather high.

It is known that polymers of reduced molecular weight can be obtained by cleavage of higher molecular weight polymers. For instance GB 883,804 describes the oxidative treatment of polyethylene and polypropylene, but the formation of an undesired colour is observed. U.S. patent 3,637,609 discloses the multi-step oxidative treatment of polymaleates, but the formation of coloured products again occurs and so a bleaching treatment is necessary.

In one aspect of the invention, a water soluble copolymer of maleic anhydride and (meth) acrylic acid (or the corresponding ammonium and/or alkali metal salt) is characterised in that it has a weight average molecular weight from 1,000 to 30,000, a polydispersity ratio from 1.5 to 4 and a dispersing capacity between 150 and 400 mg of $CaCO_3$/g of dry copolymer and preferably between 200 and 400 mg/g.

The "dispersing capacity" is the value obtained by the BASF Method, described in an article by F.Richter and E.W.Winkler, published on Tenside, Surfactants and Detergents 24, (4); page 213 (1987).

The technique used for the determination of the weight average and number average molecular weight is the gel permeation chromatography at room temperature (GPC), with the polymers in a buffer solution and using a refraction index detector or an U.V. ray detector.

The low molecular weight, low polydispersity, polymers of the invention are preferably made by oxidative cleavage of a corresponding higher molecular weight polymer. As a result of making the polymers by oxidative cleavage, it is possible to avoid the aforementioned disadvantages caused by the presence of large amounts of molecular weight regulator and it is possible to obtain a more restricted distribution of molecular weight (i.e., a relatively low polydispersity ratio).

In a second aspect of the invention, a process for producing a water soluble polymer of maleic anhydride of molecular weight 1,000 to 30,000 and preferably polydispersity 1.5 to 4 comprises reacting a polymer of higher molecular weight and polydispersity in aqueous solution containing 35 to 60% by weight polymer at pH 3 to 7.5 at a temperature of 50 to 150 °C with an oxidising agent preferably selected from hydrogen peroxide, alkali metal peroxide, ozone and sodium hypochlorite.

Although we refer herein to the polymers in the invention being derived from maleic anhydride, they can be derived from maleic acid.

The copolymers of the invention usually contain from 5 to 50% by mol of maleic anhydride and from 95 to 50% by mol of acrylic and/or methacrylic acid, but they can contain also from 0 to 30% by moles of monomeric units, derived from an unsaturated termonomer and/or, in a grafted form, from 0 to 40% by weight of a polysaccharide.

The termonomer is preferably an ethylenically unsaturated monomer and it may have the following formula:

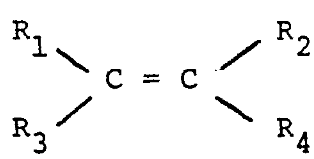

wherein $R_1$, $R_2$, $R_3$ and $R_4$, the same or different, represent hydrogen, -CN groups, alkyl (especially methyl,

ethyl or butyl) groups, carboxylic groups, ether groups, amino groups, amido groups, acetate groups or pyrrolidone groups, with the proviso that at least one of the substituents $R_1$, $R_2$, $R_3$ and $R_4$ is different from hydrogen and alkyl groups, or more than one such monomer.

Suitable termonomers include vinyl acetate; arolein; acrylamide; acrylonitrile; crotonic acid; itaconic acid; vinyl-pyrrolidone; methyl, ethyl or butyl acrylates; allyl derivatives (and in general, the alpha-, beta-unsaturated ketones). Termonomers may be selected that will modify the kinetics of the polymerisation reactions, as well as the molecular weights and the physical properties of the macromolecules, the microstructure and the final properties of the polyelectrolytes. Examples of such termonomers are vinylsulfonic acid and styrenesulfonic acid, etc., which can add (to the macromolecular chain) groups having a different and strong polarity.

Other monomer blends for copolymers according to the invention can be found in Italian patent application 20015 A/89, in the name of the applicant, as well as in European patents 103,254 and 106,991 and reference should be made to them for detailed description of suitable materials.

It can be particular advantageous to replace an amount of maleic anhydride of up to 2% by moles (on the copolymer) by fumaric acid.

Preferred copolymers of the invention are copolymers of maleic anhydride with acrylic acid or acrylic and methacrylic acids or acrylic acid and vinyl acetate or methacrylic acid and vinyl acetate.

The copolymers of the invention are all polyelectrolytes in the sense that they have ionisable functional groups.

The copolymers (including the terpolymers) can have a random, alternate or other arrangement of monomer units within the polymer chains.

The copolymers may, as mentioned above, be grafted, by graft polymerisation, on to a polysaccharide. The polysaccharide can contain optionally a carboxylic group in the recurrent units. Examples of polysaccharides include xanthan (which has a carboxylic group in the recurring unit); starch (optionally oxidated, oxy-alkylated, carboxyalkylated or etherified); pectic acid; dextrin; soluble cellulose, optionally modified; disaccharides (for instance saccharose); polydextrose; and combinations thereof.

As mentioned, the polymers are preferably made by oxidative cleavage of higher molecular weight polymers, these higher molecular weight polymers preferably having been made previously by polymerisation in aqueous solution. The oxidative cleavage reaction is preferably conducted as 80 to 120 °C at a pressure that can conveniently be substantially atmospheric pressure, although higher pressures can be used if desired.

The oxidising agent for the depolymerisation is preferably hydrogen peroxide or a material that will generate hydrogen peroxide or nascent oxygen when in contact with the water of the aqueous solution. Suitable materials are hydrogen peroxide, alkali metal peroxide, sodium hydrochloride and ozone. The oxidising agent can be formed in situ, and thus an electrolytic cell can be used to generate hydrogen peroxide. It is particularly preferred to use hydrogen peroxide and alkali metal peroxides since these do not leave any undesired by-products in the final solution.

Important features of the process are that the oxidising agent is allowed to react gradually at a pH between 3 and 7.5 with a concentrated aqueous solution of the polymer, the solution preferably containing 35 to 50% by weight of the polymer.

As a result of performing the cleavage at a pH of from 3 to 7.5, it is possible to obtain very satisfactory reaction kinetics and a high cleavage yield per unit of oxidising agent. Also, it is possible to avoid the formation of coloured by-products which often are formed at higher pH values. Thus the polymers of the invention, and the products of this process, preferably have low colour, namely a Klett colour value of 100 or less, preferably 50 or less.

The polymer that is to be degraded must be at least partially neutralised in order that the solution has the desired pH. The polymer is preferably in the form of salt of ammonium, potassium or sodium, or a mixture. Sodium is the preferred cation. The degree of neutralisation is generally in the range 30 to 95%, most preferably around 60 to 90%. The pH of the solution is preferably between 5 and 7.5.

The importance of selecting the pH in the range 3 to 7.5, preferably 5 to 7.5, is apparent from the accompanying drawing which is a curve plotting solution viscosity against the reaction pH. The solution viscosities are obtained on the solutions resulting from the cleavage after dilution with deionised water to 20% by weight. The solution viscosities are recorded by a Brookfield viscometer in mPa x s. The Brookfield viscosity is substantially proportional to the weight average molecular weight and this demonstrates that, as the pH goes above 7.5, the amount of degradation achieved in the reaction decreases significantly.

It is particularly preferred to add the oxidising agent gradually during the process, either continuously or discontinuously.

The molar ratio between the oxidising agent and the average monomeric unit in the chain is preferably

from 0.01 to 1, most preferably between 0.1 and 0.4, in order to minimise the amount of agent that is used while providing an amount that can give the desired reduction of the molecular weight. Reducing the amount of oxidising agent reduces the cleavage. Increasing the amount of the oxidising agent increases the frequency of chain cleavages and reduces the obtained molecular weight decreases. However beyond a certain value, further excess of oxidising agent is useless and sometimes dangerous.

The cleavage efficiency depends also on temperature. By increasing the temperature, the efficiency increases. At too low temperatures, for instance room temperature, the efficiency is very low. The choice of the temperature depends both on the reaction kinetics and on side-reactions. Thus the temperature should be selected so as to avoid loss of oxidising agent, and the formation of coloured products.

Although the reaction can be conducted continuously, it is generally easier and preferably to use a batch reactor. Glass reactors, enameled reactors or stainless steel reactors are suitable, equipped with a thermal jacket to adjust the temperature, thermometer and inlets for introducing the reactants.

A preferred way of carrying out the reaction in a batch reactor comprises introducing (at start up) the aqueous solution of the preformed copolymer, heating under reflux in order to remove the reaction heat (by evaporation and external condensation), and then adding the oxidising agent continuously or semi-continuously. By this way, constant and limited concentrations of reactant are obtained.

The reaction time depends on the reaction temperature, on the amount of oxidising agent and on the ease of cleavage of the macromolecular chain. The time is generally between 15 minutes and 10 hours. Generally the manufacturing operations are carried out for a time between 30 minutes and 5 hours. This period comprises also the time necessary for the exhaustion (spontaneous or by addition of further reactants) of the oxidising agent. At the end of the reaction, after the exhaustion of the oxidising agent, the solution is at a concentration very near the start concentration, but of lower viscosity. The solution can be immediately available for the end use, no post-treatment being necessary.

The oxidising treatment may be carried out on polymers of a wide range of molecular weights that can be very high, provided the polymer is water soluble.

However it is also possible to start with a polymer that is in the form of a poorly soluble gel provided this can be solubilised by the cleavage process. The most suitable range of molecular weight for the raw material which has to undergo the cleavage is above 1,000 and up to 500,000, expressed as weight average molecular weight (Mw). Preferably the raw materials have Mw between 10,000 and 150,000 and polydispersity 2 to 10. These values are typical of the products obtained in the usual copolymerisation reactions.

The products obtained according to the invention show more homogeneous characteristics and specific properties. Optional fringes of products out of specification (because of a too high molecular weight) can be easily brought again within the prefixed range. Furthermore, the poorly soluble fractions, even in the form of undesired gels, can be removed, by converting them into a product having a molecular weight within the desired scope. Another advantage of the new process is that products showing a better colour are obtained.

Furthermore, the resultant materials are different from those made by keeping the molecular weight low during the formation of the macromolecule. The process avoids the use of the expensive and often bad smelling molecular weight regulators.

The final products can be recovered directly in the form of aqueous solutions, even at a high concentration, also higher than the one of the starting materials, because the molecular weight reduction may drastically lower the viscosity of the solution, so that even highly concentrated solutions (for instance 50-60%) can be easily transferred.

The products can be made and stored as powders. The powders can be obtained by drying the previously mentioned solutions by means of apparatus such as a spray tower or flaking devices.

Such powders can be added as powders into detergent formulations by post-addition. In contrast, the solutions can be advantageously pre-added to a detergent slurry during the spray-drying operations, so that the polymer can act as a production assist, a typical action of polycarboxylates. The term "production assist" indicates a fluidising agent and the polymer can serve this purpose not only for a detergent slurry, but also for a wide range of aqueous suspensions. The most concentrated solutions require a lower evaporation heat and therefore they allow a high output capacity.

Because of the molecular weight reduction, there is only low variation of the typical properties of the carboxylates such as the calcium binding capacity (which can be measured by the turbidimetric method) and the complexing capacity (which can be evaluated by means of a particular kind of electrode). This therefore avoids problems that can arise normally in the exploitation of the carboxylates. Under the operative conditions used hitherto, no significative changes of the microstructure were observed. The yields of the process according to the invention are high (100%), in that the process minimises losses due to side-reactions or to depolymerisation (zipping).

The products can be used as anti-precipitating agents and as anti-scaling agents, for instance in the

treatment of boiler waters and kettle waters, but they are of particular value in detergents, especially as production assists in detergents.

In particular, the new products are advantageously used in formulations having a low or zero content of phosphates, in the presence of zeolite 4A as "builder", since they show a synergistic action to this zeolite.

The formulation of suitable powder detergents may include anionic surfactants, for instance LAS - linear alkyl benzene sulphonate -, alpha-sulfomethyl-esters, fatty alcohol sulfates, ethoxylates fatty alcohol sulfates. It may include non-ionic surfactants such as ethoxylates fatty alcohols, ethoxylates nonyl-phenols, alkylpolyglucosides and sugar ester.

It may include soap; builders such as zeolite, citric acid, sodium carbonate or NTA; stabilisers such as sodium silicate, DTPA, EDTA, magnesium silicate, phosphonates; bleaching agents such as sodium percarbonate, percarboxylic acids; bleaching activators, such as PAG, TAED, TAGU and NOFSNA (nonanoylphenol sodium sulfonate); inhibitor of grey colouration and anti-redeposition aids such as CMC, ethoxylated amines; inorganic salts for instance $Na_2SO_4$; or softening agents such as bentonites, or quaternary ammonium salts. Other generally used components are optical bleaching agents (for instance of the dianilino-dimorpholino-stylbene sodium disulfonate type, of the distiryldiphenyl type; perfumes, and pigments or coloured speckles.

The amount of the polymer to be used in detergent formulations, is usually from 0.5 to 10% and preferably from 1 to 5% by weight.

The following examples are supplied only for illustrative purposes without limiting in any way the claimed invention.

Example 1 (Comparative)

The apparatus for a discontinuous cleavage reaction was a 1 litre glass reactor, equipped with agitator, thermometer, reflux condenser, dripping funnel, inlet for the feeding of liquids and solids and thermostatic jacket. At the beginning of the rest, 400g of an aqueous solution of acrylic acid homopolymer having the following characteristics:

Concentration = 41 % (b.w.)
pH = 7.7
Weight Average Molecular Weight (Mw) = 25420 (GPC)
Polydispersity ratio = 3.2
Viscosity (Brookfield) = 1506 mPa.s (at 20 °C, on a 40% b.w. solution)

were introduced into the reactor. This solution was stirred and heated at 101 °C, at which temperature it began to boil. Under these conditions, 32cm$^3$ of hydrogen peroxide were added, subdivided into 4 portions, each of 8cm$^3$. The amount of $H_2O_2$ was corresponding to a molar ratio of 0.25, calculated on the monomeric unit. The portions were added at intervals of 30′, for a total of hours. At the end of the second hour, the hydrogen peroxide had essentially disappeared from the reaction medium, wholly recovered after cooling. The concentration had slightly lowered because of the added liquids. On one portion the following physico-chemical characteristics were determined:

Weight Average Molecular Weight (Mw) = 13000 (GPC)
Polydispersity ratio = 2.1
Viscosity (Brookfield) = 370 mPa.s (at 20 °C)
pH = 7.3
Dispersing capacity = 175mg $CaCO_3$/g of dry product

Example 2

An acrylic acid-maleic anhydride copolymer, containing about 65% by weight of acrylic acid and 35% by weight of maleic acid was prepared by aqueous phase copolymerisation of the monomers according to the teachings of U.S. patent 3,635,915. The solution was neutralised with NaOH (about 80% of the stoichiometric quantity); the main characteristics of this solution were as follows:

Concentration = 40% (b.w.)
pH = 7.3
Weight Average Molecular Weight (Mw) = 83950 (GPC)
Polydispersity ratio = 7.78
Viscosity (Brookfield) = 2660 mPa.s (at 20 °C, on a 40% solution)

Color (Klett) = 250

400g of solution was introduced into the same reactor as in Example 1. It was heated at 101 °C (boiling point) and $32cm^3$ of $H_2O_2$ (35% by weight) subdivided into 4 portions each of $8cm^3$, were added at intervals of 30 minutes. The hydrogen peroxide amount corresponded to a molar ratio 0.25, calculated on the average monomeric unit of the copolymer. At the end of the second hour, the absence of residual hydrogen peroxide in the reaction medium was verified; the resulting solution was then cooled and discharged. The characteristics were as

Weight Average Molecular Weight (Mw) = 23800 (GPC)

Polydispersity ratio = 3.2

Viscosity (Brookfield) = 410 mPa.s (at 20 °C on a 38% solution) pH = 7.15

Dispersing Capacity = 350 mg $CaCO_3$/g (of dry product)

Color (Klett) = 50

## EXAMPLE 3

A 35% b.w. solution of the copolymer of the example 2 was introduced into the reactor of example 1 (under the same operative conditions). The hydrogen peroxide (35% solution) was introduced subdivided into 4 portions, at intervals of 30′, and the system was kept at the boiling point for 2 hours. The hydrogen peroxyde was introduced in such an amount that the molar ratio, calculated on the monomeric unit of the copolymer, remained unchanged at a 0.25 level. After 2 hours, the hydrogen peroxide was substantially exhausted. The resulting solution was cooled, discharged and characterized as follows:

Weight Average Molecular Weight (Mw) = 17500

Polydispersity ratio = 2.80

Viscosity (Brookfield) = 20.5 mPA.s (at 20 °C, on a 18.8% solution)

Dispersing Capacity = 325 mg $CaCO_3$/g (of dry product).

## EXAMPLE 4

400 g of the solution of the copolymer of example 2 was introduced into the reactor of example 1 (under the same ope rative conditions). One introduced then, under identical conditions and subdivided into 4 equal portions (at intervals of 30′, for a total of 4 hours), 64 $cm^3$ of hydrogen peroxide, corresponding to the molar ratio 0.5, calculated on the average monomeric unit. At the end, the hydrogen peroxide was substantially wholly exhausted; the solution of the polymer having a reduced molecular weight was cooled, discharged and characterized as follows:

Weight Average Molecular Weight (Mw) = 14100

Polydispersity ratio = 2.4

Viscosity = 17.0 mPa s (at 20 °C; on a 20% solution)

Dispersing capacity = 325 mg $CaCO_3$/g

Color (Klett) = 30.

The dispersing capacity of the polymer of this example (and of the preceding examples) was determined according to the BASF METHOD already mentioned in the present description. In the practice, a sodium carbonate solution was used containing 10 g of salt per liter and evaluated at the first turbidity; the obtained values are recorded on Table A.

TABLE A

| EX. | TYPE OF POLYMER | WEIGHT AVERAGE MOLECULAR WEIGHT (Mw) | | POLYDISPERSITY RATIO (Mw:Mn) | DISPERSING CAPACITY ($mgCaCO_3/g$) | COLOR (KLETT) |
|---|---|---|---|---|---|---|
| | | before cleavage | after cleavage | | | |
| 1* | Homopolymer | 25420 | 13000 | 2.1 | 175 | - |
| 2 | Copolymer | 83950 | 23800 | 3.1 | 350 | 50 |
| 3 | Copolymer | 83950 | 17500 | 2.8 | 325 | -- |
| 4 | Copolymer | 83950 | 14100 | 2.4 | 325 | 30 |

* Comparative

Example 5 (application of the treated copolymers)

In order to analyse the behaviour (in detergent formulations) of the polyelectrolytes which had undergone a molecular weight reduction, two phosphate free powder formulations were prepared, using the compositions described below. In one, the copolymer was the start copolymer of example 2. In the other, the copolymer was the product obtained by the process of example 2.

| | |
|---|---|
| Alkylbenzenesulfonate (sodium salt) | 7.0% |
| ($C_{13}$-$C_{15}$) alcohol, ethoxylated with 11 moles of EO | 5.0% |
| Soap | 2.0% |
| 4A Zeolite | 27.5% |
| Sodium carbonate | 9.0% |
| CMC (as such) | 1.0% |
| Proteolytic enzyme | 0.4% |
| Copolymer | 4.0% |
| Sodium sulfate | 16.3% |
| Sodium perborate (tetrahydrate) | 20.0% |
| Tetra-acetyl-ethylenediamine (TAED) | 2.0% |
| Sodium disilicate | 3.0% |
| Water | 2.8% |

Washing tests in a washing machine at 60 and 90°C were carried out, measuring the washing effect and the amount of incrustations on the fabrics after 5, 10, 15 consecutive washing cycles; the whiteness degree, verified on different standard soils, and the ash content, determined after the series of washing cycles, showed that the product of Example 2 gave satisfactory results.

## Claims

1. A water soluble copolymer of maleic anhydride and (meth) acrylic acid or the corresponding ammonium and/or alkali metal salt, characterised in that it has a weight average molecular weight of from 1,000 to 30,000, a polydispersity ratio of from 1.5 to 4 and a dispersing capacity of between 150 and 400mg $CaCO_3$ per gram dry copolymer.

2. A copolymer according to claim 1 having a dispersing capacity between 200 and 400mg.

3. A copolymer according to claim 1 or claim 2 having a Klett colour value of 100 or lower, and preferably 50 or lower.

4. A copolymer according to any preceding claim formed from 5 to 50 mole percent maleic anhydride, 95 to 50 mole percent (meth) acrylic acid and 0 to 30 mole percent ethylenically unsaturated termonomer.

5. A copolymer according to claim 4 in which the termonomer is selected from vinyl acetate; acrolein; acrylamide; acrylonitrile; crotonic acid; itaconic acid; vinyl-pyrrolidone; methyl, ethyl or butyl acrylates; allyl derivatives and methyl-vinyl ketone.

6. A copolymer according to claim 4 and that is a copolymer of maleic anhydride with acrylic acid, acrylic acid and methacrylic acid, acrylic acid and vinyl acetate, or methacrylic acid and vinyl acetate.

7. A copolymer according to any preceding claim that is a polysaccharide graft copolymer containing up to 40% polysaccharide.

8. A copolymer according to any preceding claim made by oxidative cleavage of a corresponding higher molecular weight copolymer.

9. A process for producing a water soluble polymer of maleic anhydride and having molecular weight 1,000 to 30,000 comprising reacting a corresponding polymer of higher molecular weight in aqueous solution at pH 3 to 7.5 (preferably 5 to 7.5) with an oxidising agent.

10. A process according to claim 9 in which the aqueous solution contains 35 to 60%, preferably 35 to 50%, by weight of the polymer, the temperature of the reaction is 50 to 150 °C preferably 80 to 120 °C, and the oxidising agent is selected from hydrogen peroxide, alkali metal peroxides, ozone and sodium hypochloride.

11. A process according to claim 9 or claim 10 in which the polymer of higher molecular weight has molecular weight 10,000 to 150,000 and polydispersity of 2 to 10 and is 30 to 95%, preferably 60 to 90%, neutralised with ammonium, potassium or sodium (preferably sodium) cations.

12. A process according to any of claims 9 to 11 in which the oxidising agent is added continuously or semi-continuously during the process.

13. A process according to any of claims 9 to 12 in which the molar ratio of oxidising agent to average monomer unit is from 0.01 to 1, preferably 0.1 to 4.

14. A product of a process according to any of claims 9 to 13 and which is a product according to any of claims 1 to 7.

15. The use of a product according to any of claims 1 to 8 or 14 in a detergent, preferably as a production assist.

16. The use of a product according to any of claims 1 to 8 or 14 as a precipitation or scale inhibitor.

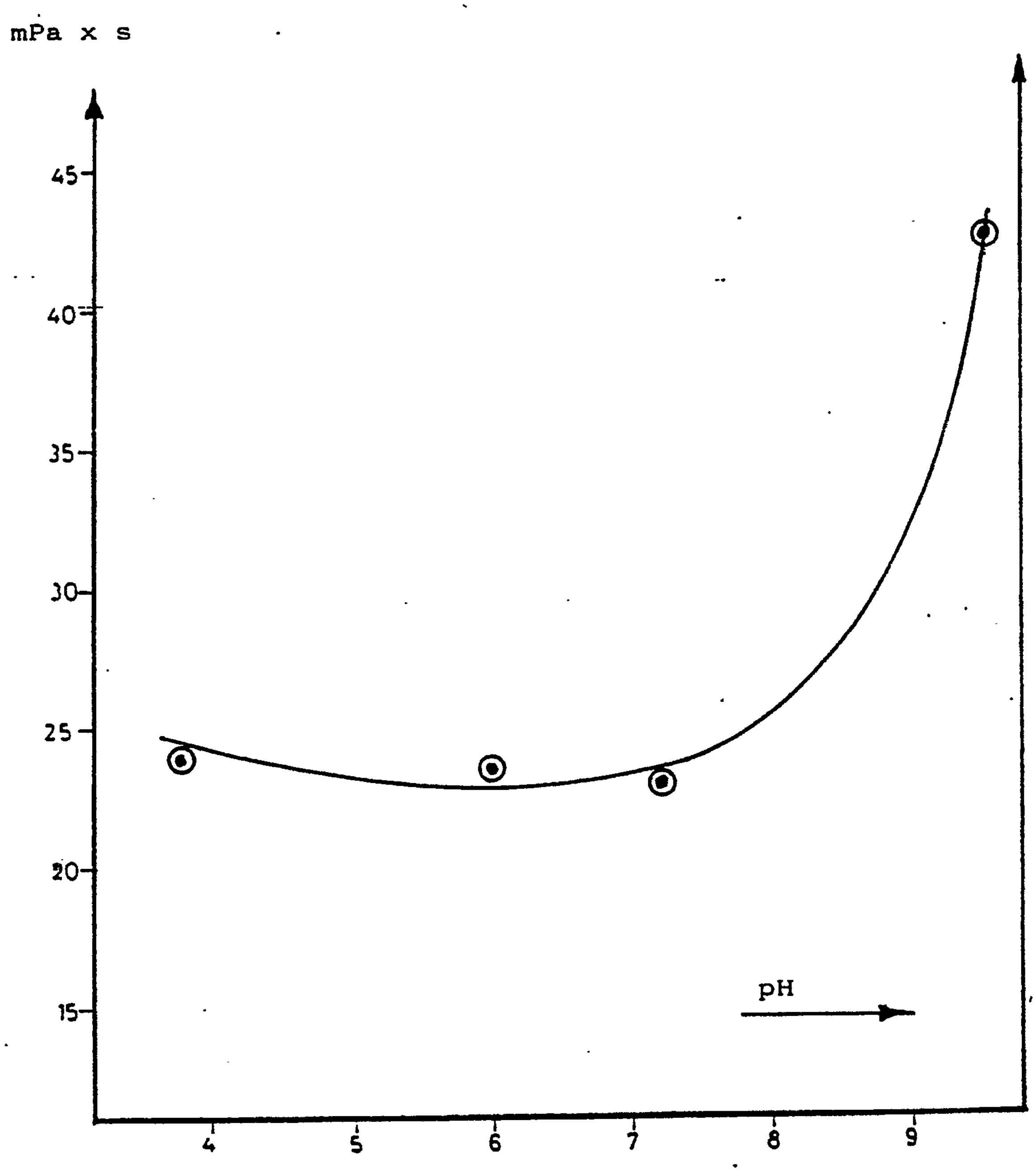


Fig. 1

European Patent Office

# EUROPEAN SEARCH REPORT

Application Number

EP 90 30 6045

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 075 820 (BASF AG)<br>* Whole document *<br>--- | 1-6 | C 08 F 222/06<br>C 08 F 220/06<br>C 02 F 1/56<br>C 11 D 3/37<br>C 08 F 251/00 |
| A,D | US-A-3 637 609 (J.H. BLUMBERG et al.)<br>* Column 2, line 25 - column 3, line 40 *<br>--- | 1-6,8-16 | |
| A | US-A-3 755 264 (AMICON CORP.)<br>* Whole document *<br>----- | 1-6,8-16 | |
| | | | TECHNICAL FIELDS SEARCHED (Int. Cl.5) |
| | | | C 08 F |

The present search report has been drawn up for all claims

| Place of search | Date of completion of the search | Examiner |
|---|---|---|
| THE HAGUE | 10-10-1990 | GLIKMAN J-F.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document